# EUROPEAN PATENT SPECIFICATION

(11) **EP 1 702 519 B1**
(45) Date of publication and mention of the grant of the patent: **08.08.2012**
(21) Application number: 04773693.9
(22) Date of filing: 01.10.2004
(51) Int. Cl.: A23L 1/325, A23B 4/16, A23L 3/3409

(54) **PROCESS FOR STERILIZATION AND PRODUCTION OF FISH MEAT PASTE PRODUCT WITH USE OF MICROBUBBLE AND STERILE FISH MEAT PASTE PRODUCT OBTAINED BY THE PROCESS**
VERFAHREN ZUR STERILISATION UND HERSTELLUNG EINES FISCHFLEISCHPASTEN-PRODUKTS UNTER VERWENDUNG VON MIKROBLÄSCHEN, SOWIE SO ERHALTENES STERILES FISCHFLEISCHPASTEN-PRODUKT
PROCEDE DE STERILISATION ET DE PRODUCTION D'UN PRODUIT SOUS FORME DE PATE DE CHAIR DE POISSON A L'AIDE DE MICROBULLES ET PRODUIT SOUS FORME DE PATE DE CHAIR DE POISSON STERILE OBTENU SELON LEDIT PROCEDE

(30) Priority: 17.10.2003 JP 2003357424
(43) Date of publication of application: 20.09.2006
(73) Proprietor: Shirade, Seizou, Ishimaki-City, Miyagi 9860824 (JP)
(72) Inventor: Shirade, Tetsuya, Ishimaki-City, Miyagi 9860824 (JP)
(74) Representative: Hooiveld, Arjen Jan Winfried
(86) International application number: PCT/JP2004/014895
(87) International publication number: WO 2005/036992

(56) References cited:
- WO-A2-01/67877
- JP-A- 7 236 461
- JP-A- 56 121 462
- JP-A- 56 121 462
- JP-A- 62 289 164
- US-A- 5 783 242
- US-A- 5 858 430
- US-B1- 6 200 618
- US-B1- 6 379 633

## Description

### Technical Field

This invention relates to a method of sterilizing and producing a fish-paste product by utilizing the sterilizing effect of ozone gas-containing microbubbles, as well as a germ-free fish-paste product produced by the production method.

### Background Art

Heating sterilizing treatment, processing under aseptic conditions, etc. are carried out in production of fish-paste products because fish-paste products are poor in an ability to keep for a long time and are subject to growth of bacteria. However, the presence of thermostable bacteria and inevitable and accidental contamination with bacteria are inevitable, so the fish-paste products suffer from problems such as deterioration in the taste, influence on the health of the consumer, etc. and are kept under conditions made aseptic to a certain degree by adding an antiseptic and a preservative.

JP-A 57-33559 and JP-A 7-298855 propose a method of bleaching and sterilizing a fish-paste product with an organic acid, but the treatment with an organic acid has a problem of reduction in the qualities of the fish-paste product (reduction in elasticity, etc.).

### Disclosure of Invention

The present invention was made under the circumstances described above, and the object of the invention is to provide a method of sterilizing and producing a fish-paste product by utilizing ozone gas-containing microbubbles, as well as a germ-free fish-paste product produced by the production method.

The object of the invention is achieved by a method for sterilizing and producing a fish-paste product by utilizing ozone gas-containing microbubbles having a diameter of 50 µm or less comprising the steps of:
adding the ozone gas-containing microbubbles generated in water to raw materials of a fish-paste product ;
coating the interfaces of the ozone gas-containing microbubbles with tissues consisting of protein and lipid contained in raw materials of the fish-paste product thereby maintaining the longevity of the ozone gas-containing microbubbles increased to 2-50 hours;
giving stimulation to a part of the ozone gas-containing microbubbles thereby rupturing coating shells of the ozone gas-containing microbubbles; and
further comprising the step of processing and packaging the fish-paste products following the step of rupturing coating shells of the ozone gas-containing microbubbles, wherein the packaged fish-paste products are subjected to the stimulation to rupture coating shells of the ozone gas-containing microbubbles contained in the fish-paste product thereby sterilizing the fish-paste product.

In a preferred embodiment of a method in accordance with the invention, wherein the step of adding the ozone gas-containing microbubbles to raw materials of the fish-paste product comprises adding water containing the ozone gas-containing microbubbles.

In a further preferred embodiment of a method according to the invention, wherein the step of adding ozone gas-containing microbubbles to raw materials of the fish-paste product comprises spraying a mist of water containing the ozone gas-containing microbubbles.

In a further preferred embodiment of a method in accordance with the invention, wherein the stimulation comprises rubbing together raw materials of the fish-paste product at the time of pestling of the raw materials.

In a further preferred embodiment of a method according to the invention, wherein the stimulation comprises high-frequency irradiation of raw materials of the fish-paste product.

Particularly, a method according to claim 1 to 4, wherein the stimulation comprises microwave irradiation of raw materials of the fish-paste product. More in particular, a method according to claim 1 to 4, wherein the stimulation comprises heating raw materials of the fish-paste product.

The present invention also refers to a germ-free fish-paste product maintaining an antibacterial ability obtained by the sterilizing production method described in claim 1 to 7.

United States patent publication no. 6,200,618 (Smith) discloses a method of reducing the microbial population on food in a container. The method generally involves the application of both a surfactant and ozone containing wash liquor to the food. The method includes introducing a wash liquor into the container, thus contacting the food with the wash liquor and wetting the food. A surfactant is then added to the wash liquor. This surfactant containing wash liquor is then allowed to contact the food for a period of time. Next, a combination of ozone gas, oxygen and/or air is mixed into the wash liquor to form an ozonated wash liquor. This ozonated wash liquor then remains in contact with the food for a period of time.

Japanese patent publication no. 56-121462 (Nippon) discloses fish meat put in a closed type stirring machine, wherein ozone is introduced to it to make its concentration, e.g., 1∼10ppm. The fish meat is blended, minced, and processed conventionally into a paste food, e.g., kamaboko (boiled fish paste), hanpen (a cake of pounded fish), chikuwa (a kind of fish paste), satsumaage (fried fish balls), etc.

United States patent publication no. 5,858,430 (Endico) discloses a food preservation and disinfection method utilizing oxygen-enriched chilled water that is applied to the food product as ice formations or alternatively is sprayed on the food product to form a frozen surface glaze. Upon thawing the frozen food product, an oxidative reaction occurs under the influence of a temperature dependent catalyst accelerant. The oxygen enrichment is accomplished by dissolving ozone and hydrogen peroxide, in combination or independently, in chilled water.

United States patent publication no. 6,379,633 (Garlick) discloses a sterilizing fog, characterized by droplet size range, vapor density range, sterilant concentration range and sterilant concentration within the droplets. Specifically, there is disclosed a fog achieved by an apparatus combining pressure, temperature and acoustics to form a super-charged ozoneated water and an apparatus that creates small micro droplets which form a highly concentrated sterilizing fog. Specific sterilants used are ozone, chlorine and chlorous acid generating compositions such as sodium hypochlorite, or combinations thereof.

### Brief Description of Drawing

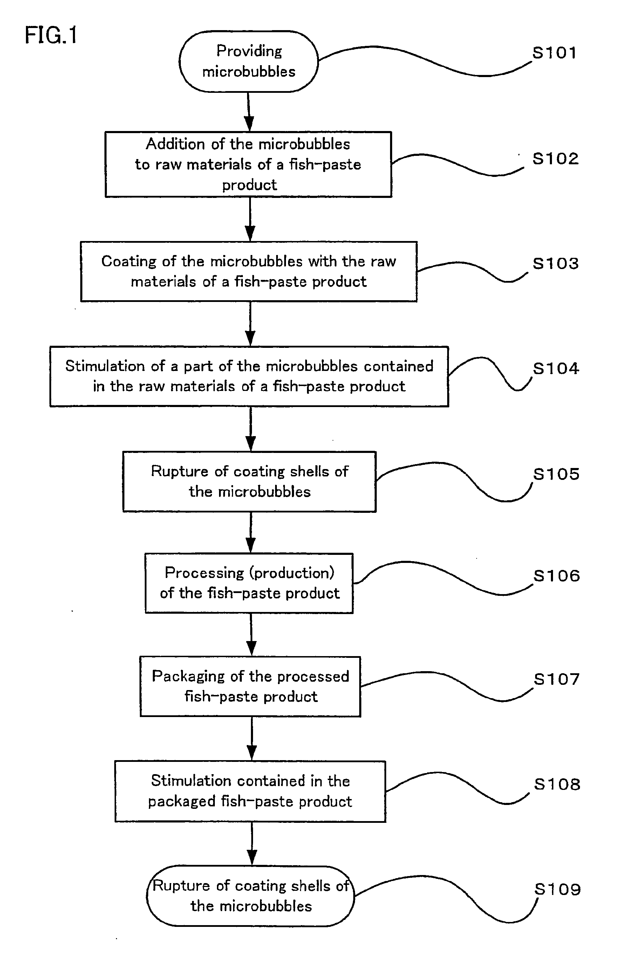

Fig. 1 is a scheme showing the method of sterilizing and producing a fish-paste product by utilizing microbubbles.

### Best Mode for Carrying Out the Invention

This invention relates to a method of sterilizing and producing a fish-paste product by utilizing microbubbles, which comprises the steps of adding ozone gas-containing microbubbles generated in water (referred to hereinafter as ozone gas-containing microbubbles) to raw materials of a fish-paste product, coating the interfaces of the ozone gas-containing microbubbles with tissues in raw materials of a fish-paste product thereby maintaining the longevity of the ozone gas-containing microbubbles, and giving stimulation to a part of the ozone gas-containing microbubbles thereby rupturing coating shells of the ozone gas-containing microbubbles, as well as a germ-free fish-paste product produced by the production method.

Now, the properties (characteristics) of the microbubbles are described in detail.

It is known that bubbles having a diameter of 50 µm or less (microbubbles) have properties different from those of usual bubbles.

The microbubbles have lower buoyancy than that of usual bubbles. Accordingly, the microbubbles are characterized by having a low rate of climb and a large surface area relative to their volume.

Hereinafter, the mode for carrying out the invention is described in detail by reference to the flow of Fig. 1.

Fig. 1 is a scheme showing the flow of the method of sterilizing and producing a fish-paste product by utilizing microbubbles according to the invention. The fish-paste product refers to boiled fish paste, a tubular roll of boiled fish paste, a light, puffy cake made of ground fish meat, a rolled omelet mixed with fish paste, *tumire* (one kind of fish paste), a deep-fried patty of fish paste, boiled fish paste with bamboo grass, and *naruto* (one kind of fish paste).

First, ozone gas-containing microbubbles are provided water (S101). An ozone gas is contained in microbubbles whereby the sterilizing effect of the ozone gas can be effectively utilized.

Then, the ozone gas-containing microbubbles provided in S101 are added to raw materials of a fish-paste product (S102). The method of adding the ozone gas-containing microbubbles to raw materials of a fish-paste product is not particularly limited, and is preferably a method wherein water containing the ozone gas-containing microbubbles is added as such to a fish-paste product or a method wherein water containing the ozone gas-containing microbubbles is sprayed in the form of a mist onto a fish-paste product. The amount of the ozone gas-containing microbubbles added to raw materials of a fish-paste product is not particularly limited, but preferably the ozone gas-containing microbubbles are added in an amount of 10 to 30 mL per g of the raw materials of a fish-paste product.

The ozone gas-containing microbubbles are coated with tissues in raw materials of the fish-paste product (S103). As described above, the longevity of microbubbles is known to be longer than that of usual bubbles, but the longevity of microbubbles cannot be maintained for a few hours or more, and thus the ozone gas-containing microbubbles shall be coated with tissues in raw materials of the fish-paste product in order to prevent disappearance of the ozone gas-containing microbubbles. Tissues in raw materials of the fish-paste product refer mainly to protein and lipid. Coating of the microbubbles with protein and lipid occurs for the following reason.

Among features of the microbubbles, the most remarkable feature is a very low rate of climb, and depending on the movement of water, the microbubbles also move similarly to water. That is, the microbubbles tend to behave as a complete mixture with water. This mixture contains a large amount of the microbubbles, so its significantly excellent property lies in permeability into other material, thus permitting the mixture to permeate very rapidly into raw materials of the fish-paste product and into the fish-paste product itself. Because the water is mixed with protein and lipid in this permeation process, the protein and lipid having hydrophobic properties will inevitably aggregate in the gas/liquid interfaces of the microbubbles. As a result, coating shells made of the protein and lipid are formed around the microbubbles, and the microbubbles having such coating shells are prevented from shrinking. Accordingly, the longevity of the microbubbles is significantly prolonged.

The longevity of the ozone gas-containing microbubbles, which is about 120 seconds when the diameter is 10 µm, can be increased to 2-50 hours by coating the ozone gas-containing microbubbles.

For rupturing the coating shells of a part of the ozone gas-containing microbubbles in the fish-paste product, the microbubbles are stimulated (S104) thereby rupturing the coating shells of the ozone gas-containing microbubbles (S105).

Because the coating shells of the ozone gas-containing microbubbles are stabilized by delicate balance, the ozone gas-containing microbubbles are ruptured one after another due to the influence of fluctuation in the thermal motion of molecules in the fish-paste product etc. On one hand, the coating shells can be forcibly ruptured by giving physical stimulation to the microbubbles.

By forcibly rupturing the coating shells by giving physical stimulation to the microbubbles, the ozone gas present in the microbubbles is released into surrounding tissues of the fish-paste product. This ozone gas is rapidly dissolved in tissues of the fish-paste product and simultaneously converted by autolysis into oxygen, and in this process, the ozone gas transiently forms active oxygen species and free radical species. These species are extremely highly aggressive to bacteria etc. and thus show an extremely excellent ability to sterilize raw materials of the fish-paste product and the fish-paste product itself. The life of active oxygen species and free radical species is very short (several milliseconds or thereabout), and the whole of ozone is converted into oxygen harmless to foods.

A part of the ozone gas-containing microbubbles contained in raw materials of the fish-paste product is stimulated to rupture coating shells, so that even if the raw materials of the fish-paste product in the stage of processing are contaminated with bacteria etc., the bacteria etc. are decomposed and the fish-paste product can be sterilized by the sterilizing effect of the ozone gas.

The ozone gas-containing microbubbles contained in raw materials of the fish-paste product are not wholly ruptured but partially stimulated, so that in the process of processing (production) of the fish-paste product, the sterilizing effect can be continued and the restimulation of the fish-paste product for storage as described later can be carried out.

The method of stimulating the ozone gas-containing microbubbles in the present invention is carried out preferably by rubbing together raw materials of a fish-paste product at the time of pestling the raw materials, by high-frequency irradiation or microwave irradiation of raw materials of a fish-paste product, or by heating raw materials of a fish-paste product.

In the method of stimulating the microbubbles by rubbing together raw materials of a fish-paste product at the time of pestling the raw materials, the ozone gas-containing microbubbles contained in the raw materials of a fish-paste product are also rubbed together at the time of pestling the raw materials of a fish-paste product. The effective pestling rate for rupturing coating shells of the microbubbles is preferably 10 to 20 cm/s, and the pestling time is preferably 20 to 60 minutes.

The method of stimulating the microbubbles by high-frequency irradiation of raw materials of a fish-paste product is a method wherein coating shells of the microbubbles are ruptured by utilizing the vibration of molecules in the raw materials of a fish-paste product upon stimulation of the microbubbles with high-frequency irradiation. The oscillation frequency of the high frequency is preferably 30 to 50 kHz, and the irradiation time is preferably 2 to 10 minutes.

The method of stimulating the microbubbles by microwave irradiation of raw materials of a fish-paste product is a method wherein coating shells of the microbubbles are ruptured by utilizing the activation of the thermal motion of molecules in the raw materials of a fish-paste product upon stimulation of the microbubbles with microwave irradiation. The oscillation frequency of the microwave is preferably 1500 to 3000 kHz, and the irradiation time is preferably 5 to 10 minutes.

The method of stimulating the microbubbles by heating raw materials of a fish-paste product is a method wherein coating shells of the microbubbles are ruptured by utilizing the vibration of molecules in the raw materials of a fish-paste product upon direct heating of the raw materials of a fish-paste product. Heating refers to steaming, deep-frying, baking, boiling, heating with Joule heat, etc. The heating temperature is preferably 50 to 80°C, and the heating time is preferably 20 to 40 minutes.

As the method of stimulating the microbubbles as described above, a suitable method can be selected depending on the fish-paste product to be produced.

The microbubbles whose coating shells are not ruptured will release an ozone gas for a long time because the coating shells are gradually ruptured by the influence of thermal fluctuation in raw materials of a fish-paste product upon stimulation or by their surrounding environment etc.

The ozone gas-containing microbubbles contained in raw materials of a fish-paste product are stimulated to rupture the coating shells, whereby the raw materials of a fish-paste product are sterilized, and the sterilizing action is continued even in the process for producing a fish-paste product. That is, the sterilizing effect is continued throughout a period of from the processing (production) of the fish-paste product (S106) to the packaging of the fish-paste product (S107).

The raw materials of the fish-paste product are stimulated to rupture the coating shells, followed by the processing (production) of the fish-paste product (S106) and the packaging of the processed (produced) fish-paste product (S107).

The packaged fish-paste product is stimulated (S108), and the coating shells of the ozone gas-containing microbubbles whose coating shells are still not ruptured are ruptured (S109). By doing so, storage for a long time can be achieved.

Stimulation in this stage is preferably high-frequency irradiation or microwave irradiation mentioned above because the fish-paste product has been packaged. The oscillation frequency in high-frequency irradiation is preferably 30 to 50 Hz, the oscillation frequency in microwave irradiation is preferably 1500 to 3000 Hz, and the irradiation time is preferably 2 to 3 minutes.

If the coating shells of the microbubbles are not completely ruptured, the microbubbles whose coating shells are not ruptured will release an ozone gas for a long time to continue sterilizing effect for a long time because the coating shells are ruptured one after another by the influence of thermal fluctuation in the raw materials of a fish-paste product upon stimulation or by their surrounding environment etc. Accordingly, the decomposition of bacteria etc. due to rupture of the coating shells of the microbubbles, and the sterilizing effect of the ozone gas, can be continued for a prolonged period of time, thus providing the fish-paste product having an antibacterial ability to the consumer, which makes use of an antiseptic and a preservative unnecessary thereby preventing deterioration in qualities of the fish-paste product and deterioration in the taste of the fish-paste product and eliminating influence on the health of the consumer.

The method of sterilizing and producing a fish-paste product by utilizing microbubbles according to the present invention has been described by reference to the flow shown in Fig. 1, but the present invention is not limited thereto. For example, after the step in S106 in the present invention, the ozone gas-containing microbubbles may be stimulated (S108), followed by packaging the processed fish-paste product.

In the step of stimulating a part of the microbubbles contained in the raw materials of the fish-paste product (S104), all the microbubbles contained in the raw materials of the fish-paste product may be stimulated to rupture the coating shells of the microbubbles. By doing so, the step of stimulating the microbubbles contained in the raw materials of the fish-paste product (S108) and the step of rupturing the coating shells of the microbubbles (S109) can be omitted.

Hereinafter, the method of sterilizing and producing a fish-paste product by utilizing microbubbles is illustrated by reference to the Examples.

### Examples

### Example 1

0.5 L water containing ozone gas-containing microbubbles having an average bubble diameter of 15 µm at a density of at least 5000 bubbles per ml was added to 10 kg raw materials of a fish-paste product after thawing, and within 20 seconds after addition, the raw materials were subjected to pestling. Pestling was continued for 20 minutes during which the relative speed of a pestle to a mortar was kept at 15 cm/s. In the raw materials, the number of general bacteria was 184600/g, the number of *Escherichia coli* bacteria was 50/g, the number of *Staphylococcus aureus* bacteria was 650/g, the number of *Salmonella* bacteria was 50/g, *Cereus* bacteria were ++, and the number of *Vibrio parahaemolyticus* bacteria was 950/g, but after pestling was carried out, the number of any kind of the bacteria was 0/g or below the measuring range.

### Example 2

10 kg raw materials of a fish-paste product after forming were sprayed with a mist of 0.1 L water containing ozone gas-containing microbubbles having an average bubble diameter of 15 µm at a density of at least 5000 bubbles per ml, and after spraying, were baked in a covered pan at 60°C for 15 minutes. In the raw materials, the number of general bacteria was 184600/g, the number of *Escherichia coli* bacteria was 50/g, the number of *Staphylococcus* aureus bacteria was 650/g, the number of *Salmonella* bacteria was 50/g, Cereus bacteria were ++, and the number of *Vibrio parahaemolyticus* bacteria was 950/g, but after baking in a covered pan, the number of any kind of the bacteria was 0/g or below the measuring range.

### Example 3

10 kg raw materials of a fish-paste product after forming were sprayed with a mist of 0.1 L water containing ozone gas-containing microbubbles having an average bubble diameter of 15 µm at a density of at least 5000 bubbles per ml, and after spraying, the fish-paste product after forming was irradiated with a high frequency with an oscillation frequency of 35 kHz for 1 minute. The number of *Cereus* bacteria contained in the raw materials before irradiation with the high frequency was +, but after irradiation with the high frequency, was below the measuring range.

### Example 4

10 kg raw materials of a fish-paste product after forming were sprayed with a mist of 0.1 L water containing ozone gas-containing microbubbles having an average bubble diameter of 15 µm at a density of at least 5000 bubbles per ml, and after spraying, the fish-paste product after forming was irradiated with a microwave with an output power of 1.5 kW and an oscillation frequency of 2000 kHz for 5 minutes. The number of Cereus bacteria contained in the raw materials before irradiation with the microwave was +, but after irradiation with the microwave, was below the measuring range.

### Example 5

10 kg raw materials of a fish-paste product after heating treatment were sprayed with a mist of 0.05 L water containing ozone gas-containing microbubbles having an average bubble diameter of 15 µm at a density of at least 5000 bubbles per ml, and after spraying, the fish-paste product was packaged without adding a preservative. The fish-paste product after packaging was irradiated with a microwave with an output power of 1.5 kW and an oscillation frequency of 2000 kHz for 3 minutes, and a test of storage for 3 days in an atmosphere kept at a temperature of 30°C was conducted. As a result, the number of general bacteria in the fish-paste product on the third day was 16150/g, and the number of either *Escherichia coli* or Cereus bacteria was below the measuring range.

### Effect of the Invention

The method of sterilizing and producing a fish-paste product by utilizing microbubbles according to the present invention can be used in sterilizing raw materials of a fish-paste product, sterilizing them in the process of producing a fish-paste product, making the final product germ-free, and attaining a lasting effect of sterilization, and does thus not require addition of an antiseptic or a preservative thereby preventing the deterioration in qualities of the fish-paste product and the deterioration in the taste thereof caused by an antiseptic or a preservative and eliminating the influence of an antiseptic or a preservative if any on the health of the consumer.

### Industrial Applicability

The method of sterilizing and producing a fish-paste product by utilizing microbubbles according to the present invention can be used in sterilizing raw materials of a fish-paste product, sterilizing them in the process for producing a fish-paste product, making the final product germ-free and achieving a lasting effect of sterilization, and is applicable in food-related fields. According to the present invention, there can be provided foods not requiring addition of an antiseptic or a preservative, thus preventing the deterioration in qualities of the fish-paste product and the deterioration in the taste thereof caused by an antiseptic and a preservative and eliminating the influence of an antiseptic and a preservative if any on the health of the consumer.

## Claims

1. A method for sterilizing and producing a fish-paste product by utilizing ozone gas-containing microbubbles having a diameter of 50 µm or less comprising the steps of:
adding the ozone gas-containing microbubbles generated in water to raw materials of a fish-paste product ;
coating the interfaces of the ozone gas-containing microbubbles with tissues consisting of protein and lipid contained in raw materials of the fish-paste product thereby maintaining the longevity of the ozone gas-containing microbubbles increased to 2-50 hours;
giving stimulation to a part of the ozone gas-containing microbubbles thereby rupturing coating shells of the ozone gas-containing microbubbles; and
further comprising the step of processing and packaging the fish-paste products following the step of rupturing coating shells of the ozone gas-containing microbubbles, wherein the packaged fish-paste products are subjected to the stimulation to rupture coating shells of the ozone gas-containing microbubbles contained in the fish-paste product thereby sterilizing the fish-paste product.

2. A method according to claim 1, wherein the step of adding the ozone gas-containing microbubbles to raw materials of the fish-paste product comprises adding water containing the ozone gas-containing microbubbles.

3. A method according to claim 1, wherein the step of adding ozone gas-containing microbubbles to raw materials of the fish-paste product comprises spraying a mist of water containing the ozone gas-containing microbubbles.

4. A method according to claim 1 to 3, wherein the stimulation comprises rubbing together raw materials of the fish-paste product at the time of pestling of the raw materials.

5. A method according to claim 1 to 4, wherein the stimulation comprises high-frequency irradiation of raw materials of the fish-paste product.

6. A method according to claim 1 to 4, wherein the stimulation comprises microwave irradiation of raw materials of the fish-paste product.

7. A method according to claim 1 to 4, wherein the stimulation comprises heating raw materials of the fish-paste product.

8. A germ-free fish-paste product maintaining an antibacterial ability obtained by the sterilizing production method described in claim 1 to 7.

## Patentansprüche

1. Verfahren zum Sterilisieren und Herstellen eines Fischpasten-Produkts durch Einsetzen von Ozongas enthaltenden Mikroblasen mit einem Durchmesser von 50 µm oder weniger, das die Schritte umfasst:
Zusetzen der Ozongas enthaltenden Mikroblasen, die in Wasser erzeugt werden, zu Rohmaterialien eines Fischpasten-Produkts;
Beschichten der Grenzflächen der Ozongas enthaltenden Mikroblasen mit Geweben, die aus Protein und Lipid bestehen, enthalten in Rohmaterialien des Fischpasten-Produkts, wodurch die Langlebigkeit der Ozongas enthaltenden Mikroblasen, die auf 2-50 Stunden erhöht ist, aufrechterhalten wird;
Stimulieren eines Teils der Ozongas enthaltenden Mikroblasen, wodurch Überzugshüllen der Ozongas enthaltenden Mikroblasen aufgebrochen werden; und
das weiter den Schritt der Verarbeitung und Verpackung der Fischpasten-Produkte im Anschluss an den Schritt des Aufbrechens der Überzugshüllen der Ozongas enthaltenden Mikroblasen umfasst, wobei die verpackten Fischpasten-Produkte der Stimulation zum Aufbrechen der Überzugshüllen der Ozongas enthaltenden Mikroblasen, die im Fischpasten-Produkt enthalten sind, unterzogen werden, wodurch das Fischpasten-Produkt sterilisiert wird.

2. Verfahren nach Anspruch 1, wobei der Schritt des Zusetzens der Ozongas enthaltenden Mikroblasen zu Rohmaterialien des Fischpasten-Produkts das Zugeben von Wasser umfasst, das die Ozongas enthaltenden Mikroblasen enthält.

3. Verfahren nach Anspruch 1, wobei der Schritt des Zusetzens der Ozongas enthaltenden Mikroblasen zu Rohmaterialien des Fischpasten-Produkts das Versprühen eines Wassemebels umfasst, der die Ozongas enthaltenden Mikroblasen enthält.

4. Verfahren nach Anspruch 1 bis 3, wobei die Stimulation das Gegeneinanderreiben von Rohmaterialien des Fischpasten-Produkts zum Zeitpunkt des Zerstoßens der Rohmaterialien umfasst.

5. Verfahren nach Anspruch 1 bis 4, wobei die Stimulation Hochfrequenzbestrahlung von Rohmaterialien des Fischpasten-Produkts umfasst.

6. Verfahren nach Anspruch 1 bis 4, wobei die Stimulation Mikrowellenbestrahlung von Rohmaterialien des Fischpasten-Produkts umfasst.

7. Verfahren nach Anspruch 1 bis 4, wobei die Stimulation das Erhitzen von Rohmaterialien des Fischpasten-Produkts umfasst.

8. Keimfreies Fischpasten-Produkt, das eine antibakterielle Fähigkeit aufrechterhält, das erhalten ist durch das sterilisierende Herstellungsverfahren, das in Anspruch 1 bis 7 beschrieben ist.

## Revendications

1. Procédé de stérilisation et de fabrication de produits de type mousse de poisson en utilisant des microbulles contenant du gaz ozone, de 50 µm de diamètre au moins, ledit procédé comprenant les étapes de :
ajout de microbulles contenant du gaz ozone générées dans l'eau à des matières de base d'un produit de type mousse de poisson ;
revêtement des interfaces des microbulles contenant du gaz ozone avec des tissus constitués de protéines et de lipides contenus dans les matières de base du produit de type mousse de poisson, ce qui permet d'augmenter la longévité des microbulles contenant du gaz ozone jusqu'à 2 à 50 heures ;
stimuler une partie des microbulles contenant du gaz ozone, ce qui permet de rompre les coques de revêtement des microbulles contenant du gaz ozone ; et
inclure en outre l'étape de traitement et d'emballage des produits de type mousse de poisson faisant suite à l'étape de rupture des coques de revêtement des microbulles contenant du gaz ozone, dans laquelle les produits de type mousse de poisson emballés sont soumis à la stimulation pour provoquer la rupture des coques de revêtement des microbulles contenant du gaz ozone contenues dans le produit de type mousse de poisson, ce qui permet de stériliser le produit de type mousse de poisson.

2. Procédé selon la revendication 1, dans lequel l'étape d'ajout des microbulles contenant du gaz ozone aux matières de base du produit de type mousse de poisson comprend l'ajout d'eau contenant les microbulles contenant du gaz ozone.

3. Procédé selon la revendication 1, dans lequel l'étape d'ajout de microbulles contenant du gaz ozone aux matières de base du produit de type mousse de poisson comprend la pulvérisation d'un brouillard d'eau contenant des microbulles contenant du gaz ozone.

4. Procédé selon les revendications 1 à 3, dans lequel la stimulation comprend le processus consistant à faire frotter ensemble les matières de base du produit de type mousse de poisson au moment du passage des matières de base au pilon.

5. Procédé selon les revendications 1 à 4, dans lequel la stimulation comprend l'irradiation aux hautes fréquences des matières de base du produit de type mousse de poisson.

6. Procédé selon les revendications 1 à 4, dans lequel la stimulation comprend l'irradiation aux microondes des matières de base du produit de type mousse de poisson.

7. Procédé selon les revendications 1 à 4, dans lequel la stimulation comprend le chauffage des matières de base du produit de type mousse de poisson.

8. Produit de type mousse de poisson dépourvu de germes présentant une capacité antibactérienne obtenue par le procédé de fabrication avec stérilisation décrit dans les revendications 1 à 7.
